Europäisches Patentamt

European Patent Office

Office européen des brevets

(11) Publication number: **0 296 888 B1**

# EUROPEAN PATENT SPECIFICATION

(45) Date of publication of patent specification: **18.08.93**  (51) Int. Cl.⁵: **G11B 11/10**

(21) Application number: **88305842.2**

(22) Date of filing: **24.06.88**

(54) **Magnetooptical recording media.**

(30) Priority: **26.06.87 JP 158918/87**
**25.12.87 JP 329246/87**
**25.12.87 JP 329247/87**
**25.12.87 JP 329248/87**
**28.12.87 JP 334951/87**
**28.12.87 JP 334952/87**
**28.12.87 JP 334953/87**
**22.02.88 JP 39289/88**
**30.03.88 JP 77524/88**
**30.03.88 JP 77526/88**
**30.03.88 JP 77527/88**
**30.03.88 JP 77528/88**
**16.05.88 JP 118642/88**
**16.05.88 JP 118643/88**

(43) Date of publication of application:
**28.12.88 Bulletin 88/52**

(45) Publication of the grant of the patent:
**18.08.93 Bulletin 93/33**

(84) Designated Contracting States:
**DE FR GB NL**

(56) References cited:
**EP-A- 0 130 698**
**US-A- 4 675 767**

(73) Proprietor: **MITSUBISHI KASEI CORPORATION**
**5-2, Marunouchi 2-chome Chiyoda-ku**
**Tokyo 100(JP)**

(72) Inventor: **Kobayashi, Yoshimitsu**
**4-20-6 Nishiogi-Kita**
**Suginami-ku Tokyo(JP)**
Inventor: **Kisaka, Yoshiyuki**
**27-1-309 Ibukino Midori-ku**
**Yokohama-shi Kanagawa-ken(JP)**
Inventor: **Ohya, Akihiko**
**2-406 Popuragaoka-Koopu 2-13-2 Naruse**
**Machida-shi Tokyo(JP)**
Inventor: **Kawano, Toshifumi**
**5-1 Tsutsujigaoka Midori-ku**
**Yokohama-shi Kanagawa-ken(JP)**
Inventor: **Komatsu, Masao Fujigaoka-Ryo**
**28-6 Umegaoka Midori-ku**
**Yokohama-shi Kanagawa-ken(JP)**
Inventor: **Tanaka, Yuki 202 Haitsu-Amano**
**15-12 Sumiyoshidai Midori-ku**
**Yokohama-shi Kanagawa-ken(JP)**

(74) Representative: **Woods, Geoffrey Corlett et al**
**J.A. KEMP & CO. 14 South Square Gray's Inn**
**London WC1R 5EU (GB)**

PATENT ABSTRACTS OF JAPAN vol. 10, no. 72 (P-438)(2129) 22 March 1986 & JP-A-60 209946

PATENT ABSTRACTS OF JAPAN vol. 6, no. 84 (P-117)(962) 22 May 1982 & JP-A-57 020933

**Description**

The present invention relates to a magnetooptical recording medium.

Among optical memory elements, there may be mentioned a magnetooptical recording system which has an erasable memory for additional recording and erasure. At present, rare earth and transition metal alloy thin films are used for the recording layer of magnetooptical recording media in view of their overall characteristics.

As a magnetooptical recording medium, a medium has been proposed in which a reflective layer is provided on the magnetooptical recording layer disposed on a substrate to improve the recording and reproducing efficiency when using a a laser beam. This medium is excellent since a high S/N ratio is obtained due to utilization of both the Kerr effect and the Faraday effect.

Hitherto, a magnetooptical medium comprising a magnetic layer, a protective layer and a base plate, characterised in that the protective layer is a layer of a complex oxide containing an oxide of aluminium has been proposed [EP-B-0,208,549 (corresponding to US-A-4,743,502)].

Furthermore, we have already proposed many inventions relating to magnetooptical recording media (e.g., Japanese Patent Application No. 60-151506 (1985), JP-A-62-102448 (1987), JP-A-62-117156 (1987), JP-A-62-110642 (1987), and Japanese Patent Applications Nos. 61-227424 (1986), 61-310115 (1986), 61-310116 (1986), 62-744 (1987), 62-2339 (1987), 62-2337 (1987), 62-90370 (1987), 62-105289 (1987) and 62-110199 (1987)).

A magnetooptical medium has also been proposed in GB-A-2143689, US-A-4268575, US-A-4461807, US-A-4449138, US-A-4579777, US-A-4578322, US-A-4569881, US-A-4562105, US-A-4414650, US-A-4586092, DE-A-3500314, JP-A-60-197964, JP-A-60-202559, JP-A-60-54056, and IBM TDB Vol. 16, No. 5 (Oct. 1973) page 1442.

An Al or Te reflective layer has conventionally been proposed as the reflective layer of a magnetooptical recording medium comprising a substrate, a magnetooptical recording layer and a reflective layer, in which the magnetooptical recording layer is disposed between the substrate and the reflective layer (JP-A-62-52744 (1987)). However, the high heat conductivity of an Al reflective layer greatly reduces the recording sensitivity, and it is impossible to obtain a sufficient S/N ratio using a Te reflective layer owing to the low reflectivity thereof in spite of the advantage of improved recording sensitivity.

A magnetooptical storage element in which an aluminium-nickel alloy is used as a reflective layer (US-A-4,717,628) and an optical information recording medium in which an aluminium-titanium alloy is used as a reflective layer (US-A-4,725,502) have also been proposed.

Although in the magnetooptical recording media formerly proposed an aluminium alloy is used as a reflective layer, which provides a sufficient S/N ratio and recording sensitivity, the corrosion resistances of these media are not satisfactory.

Patents Abstracts of Japan, Vol 10 no. 72 (P-438)(2129) and JP-A-60-209946 disclose an optomagnetic recording material comprising a transparent substrate, an interference layer, a recording layer and a reflecting layer, in this order.

Patents Abstracts of Japan, Vol 6, no. 84 (P-117)(962) and JP-A-57-20933 disclose an information recording material comprising a base material having grooves or lines of pits for recording information and a metal coating film of a metal having a relatively high melting point and high corrosion resistance selected from Ni, Cr, Fe, Co, Mn, Ti, V, Ta, Nb, Mo, W, Hf, Zr, Au, Ag and Pt alloyed with a metal having a relatively high reflectivity or dielectric constant or base metal selected from Al, Sn, Cu, Mg, Sb, As and Se.

US-A-4,675,767 discloses a magnetooptical recording medium comprising a transparent substrate, a recording layer, a reflective layer and a protective layer, in this order.

EP-A-130,698 discloses an optical memory disk obtained by depositing a trilayer substrate on a transparent substrate. Double-sided disks can be produced by coupling two such discs.

As a result of the present inventors' studies to provide a magnetooptical recording medium having high corrosion resistance, a high S/N ratio and high recording sensitivity, it has been found that a magnetooptical recording medium wherein an aluminium-tantalum alloy is used as a reflective layer has a high carrier level and excellent stability over time and a magnetooptical recording medium having an organic protective layer has high corrosion resistance and carrier level.

The present invention provides a magnetooptical recording medium comprising a transparent substrate, an interference layer, a magnetooptical recording layer and a reflective layer, the magnetooptical recording layer being provided between the interference layer and the reflective layer, characterized in that the reflective layer is composed of an Al alloy containing 0.1 to 15 at% Ta.

An organic protective layer may be provided such that the reflective layer is provided between the magnetooptical recording layer and the organic protective layer.

Two members, each in the form of a disk and comprising a transparent substrate, a magnetooptical recording layer and a reflective layer, in which the magnetooptical recording layer is provided between the transparent substrate and the reflective layer, at least one of said members also having an interference layer provided between the transparent substrate and the magnetooptical recording layer, are joined, for example by pasting, to each other through an organic protective layer to provide a medium having layers in the order of the transparent substrate, the magnetooptical recording layer, the reflective layer, the organic protective layer, the reflective layer, the magnetooptical recording layer and the transparent substrate, and an interference layer provided between at least one of the transparent substrates and the magnetooptical recording layer.

Fig. 1 shows the change in carrier level and the optimum recording power relative to the amount of Ta added to the reflective film;

Fig. 2 shows the change in drop-in error rate in acceleration tests of the disks in Examples 2 to 6 having different protective layers;

Fig. 3 shows the correlation between the reactive sputtering pressure and the refractive index of the tantalum oxide film at a wavelength of 633 nm in Example 2;

Fig. 4 shows the change in optimum recording power of the medium caused when the film thickness of the protective layer is varied in Example 3;

Fig. 5 shows the increase in error rate over time in the acceleration tests in Example 10 and Comparative Example 4, wherein A represents the disk in Example 10, and B represents the disk in Comparative Example 4; and

Fig. 6 shows the increase in error rate over time in the acceleration test in Example 12.

Examples of the transparent substrate used in the media of the present invention are glass, a plastic material such as an acrylic resin or a polycarbonate resin, and a glass substrate with a grooved resin provided thereon.

The thickness of the substrate is generally from 1 to 2 mm.

The magnetooptical recording layer may, for example, be composed of a magnetic alloy, preferably amorphous, of a rare earth and a transition metal, such as TbFe, TbFeCo, TbCo and DyFeCo, or a polycrystalline vertical magnetic film of, for example, MnBi or MnCuBi.

Among these an alloy which contains at least one of Tb, Fe and Co is preferred.

The magnetooptical recording layer may consist of either a single layer or two or more layers such as TbFeCo/TbFe. The thickness of the magnetooptical recording layer is generally from 25 to 50 nm (250 to 500 Å).

The interference layer is provided between the or at least one of the substrates and the magnetooptical recording layer in order to reduce the reflectivity by utilizing the light interference effect of a transparent film having a high refractive index, and in order to reduce the noise, thereby improving the S/N ratio. The interference layer may consist of either a single-layer film or a multi-layer film. The interference layer is preferably composed of a metal or metalloid oxide or a metal or metalloid nitride. As a metal or metalloid oxide, $Al_2O_3$, $Ta_2O_5$, $SiO_2$, $SiO$, $TiO_2$ or a mixture thereof may, for example, be used. A compound oxide of Al-Ta-O may also be used. It is further possible to form oxides by combining an oxide of other elements such as Ti, Zr, W, Mo and Yb, or a composite of the other elements with Al or Ta, with the above metal oxides. These metal oxides are dense, prevent the ingress of water or oxygen from the outside, have high corrosion resistance and small reactivity with the recording layer. They have excellent adhesion with the substrate even if a resin substrate is used.

Tantalum oxide is particularly preferred as the metal oxide for the interference layer.

The tantalum oxide preferably has a composition close to the stoichiometric composition ($Ta_2O_5$). If the amount of oxygen is excessive, the recording layer is oxidized. On the other hand, if the amount of oxygen is insufficient, corrosion is concentrated on the unoxidized portion, thereby producing a pin hole.

The preferred refractive index (n) of the metal oxide in a preferred oxidized state is such that $2.0 \leq n \leq 2.2$ and the extinction coefficient (k) is such that $|k| < 0.15$, in the case where it is assumed that the complex refractive index (n*) measured at a wavelength of 633 nm is $n^* = n - iK$ (wherein i represents an imaginary number).

Examples of the metal or metalloid nitride used for the interference layer are silicon nitride and aluminum nitride. Silicon nitride is preferred.

If the N content in the silicon nitride is too large, the refractive index of the layer is reduced and the density is lowered. On the other hand, if the N content is too small, absorption is produced on the layer, thereby lowering the carrier level. Therefore, it is preferred that the ratio of Si to N is the stoichiometric composition ($Si_3N_4$), or that the Si content is slightly larger than that of this ratio. More specifically, the atomic ratio Si:N is preferably from 0.75:1 1.0:1. The preferred refractive index (n) of the metal nitride is such that $2.0 \leq n \leq 2.5$ and the extinction coefficient (k) is such that $0 < k < 0.2$, in the case where it is assumed that the complex refractive index (n*) measured at a wavelength of 633 nm is $n* = n - iK$ (wherein i represents an imaginary number).

The optimum thickness of the interference layer depends on the refractive index, but is ordinarily from 40 to 150 nm (400 to 1,500 Å), preferably from 50 to 100 nm (500 to 1,000 Å).

The magnetooptical recording medium of the present invention is a reflection-type magnetooptical recording medium and has a reflective layer on the magnetooptical recording layer.

The reflective layer comprises an alloy of Al and Ta. The Ta content is 0.1 to 15 at%, preferably 0.5 to 10 at%, more preferably 1 to 8 at%.

Pure Al is a good substance for the reflective layer in respect of high reflectance and comparatively high corrosion resistance. However, since Al has a high heat conductivity, the sensitivity is fatally deteriorated. In contrast, when Ta is added to Al, it is possible to lower the heat conductivity without reducing the reflectance too much. In other words, it is possible to improve the recording sensitivity while maintaining a good S/N ratio. In addition, an alloy of Al and Ta has a higher corrosive resistance than an alloy of Al and a substance other than Ta, for example, Si or Pt.

The alloy of Al and Ta used for the reflective layer according to the present invention may contain a small amount of other elements such as Cu, Mn and Mg.

The thickness of the reflective layer is generally from 10 to 100 nm (100 to 1,000 Å) preferably from 20 to 60 nm (200 to 600 Å).

If the reflective layer is too thick, the sensitivity is deteriorated, while too thin a reflective layer reduces the reflectance and the S/N ratio.

A protective layer composed of a metal or metalloid oxide or a metal or metalloid nitride may further be provided on the reflective layer. As the protective layer, the metal or metalloid oxide and the metal or metalloid nitride used for the interference layer may be used. These metal or metalloid oxides and metal or metalloid nitrides are dense and prevent the ingress of water and oxygen from the outside.

The greater the thickness of the protective layer is, the greater are both the protective ability and the deterioration of the sensitivity. The appropriate thickness of the protective layer is, therefore, ordinarily from 5 to 50 nm (50 to 500 Å).

When the interference layer, recording layer, reflective layer and protective layer are formed on the substrate, physical vapor deposition (PVD), such as sputtering, or chemical vapor deposition (CVD), such as plasma chemical vapor deposition, may, for example, be used.

When the interference layer, magnetooptical layer, reflective layer and protective layer are formed by PVD, each layer is ordinarily deposited on the substrate by electron beam deposition or sputtering while using a target of a predetermined composition. Alternatively, an ion plating method may be used.

If the deposition rate of a layer is too high, the layer stress is increased, while if it is too low, the productivity is adversely influenced. A deposition rate of from 0.01 to 10 nm/s (0.1 to 100 Å/s) is, therefore, ordinarily used.

Some embodiments of a magnetooptical recording medium having an organic protective layer according to the present invention are:

(i) A magnetooptical recording medium comprising a transparent substrate, an interference layer provided on the transparent substrate, a magnetooptical recording layer, a reflective layer and an organic protective layer, the magnetooptical recording layer and the reflective layer being provided between the interference layer and the organic protective layer.

(ii) A magnetooptical recording medium comprising a transparent substrate, an interference layer disposed on the transparent substrate, a magnetooptical recording layer, a reflective layer, a protective layer composed of a metal or metalloid oxide or a metal or metalloid nitride and an organic protective layer disposed on the protective layer, the magnetooptical recording layer and the reflective layer being provided between the interference layer and the protective layer in that order.

Another layer may be incorporated into the above-mentioned embodiments so far as the properties of the magnetooptical recording medium are not impaired.

As the organic protective layer, organic materials in which the 100% tensile stress defined by JIS (Japanese Industrial Standard) K6301 is not more than 4.9 MPa (50 kgf/cm$^2$) and the moisture permeability rate defined by JIS Z0208 is not more than 20 g/m$^2$ in 24 hours are preferably used. Organic materials in which the 100% tensile stress is not more than 2.9 MPa (30 kgf/cm$^2$), more preferably not more than 1.5 MPa (15 kgf/cm$^2$) and the moisture permeability rate is not more than 10 g/m$^2$, more preferably not more than 7 g/m$^2$ in 24 hours are more preferably used.

As the organic material having the above-described properties, polyurethanes obtainable from a hydrocarbon polyol may be exemplified.

Such polyurethanes may, for example, be obtained by mixing a hydrocarbon polyol having a low hygroscopic property as the main component with an isocyanate compound in a mixing ratio such that the NCO:OH ratio is from 0.8:1 to 1.3:1, preferably from 0.9:1 to 1.1:1, and curing the resultant mixture.

Polyhydroxy polybutadiene, which is the raw material of a polyol, is a polybutadiene polymer having not less than 1 hydroxyl group, preferably from 1.8 to 5.0 hydroxyl groups, per molecule. The average molecular weight thereof is ordinarily from 500 to 50,000, preferably from 1,000 to 20,000. The method of producing polyhydroxy polybutadiene is not important, but the following methods are preferred:

For example, polyhydroxy polybutadiene is obtained by radical-polymerizing butadiene in a solvent, such as an alcohol, ketone or ester, using a radical polymerization initiator having a hydroxyl group such as hydrogen peroxide, cyclohexanone peroxide, methylethyl ketone peroxide or an azobis compound having a functional group such as $\beta$, $\beta'$-azobis ($\beta$-cyano)-n-propanol or $\delta,\delta'$-azobis ($\delta$-cyano)-n-pentanol; or polymerizing butadiene similarly using a radical polymerization initiator such as an aliphatic azodicarboxylic acid or an ester thereof and thereafter reducing the carboxyl group or the ester portion thereof.

Alternatively, a method comprising anionically polymerizing butadiene using an alkali metal such as sodium, lithium or a complex of an alkali metal and a polycyclic aromatic compound as a catalyst, and thereafter functionalizing the polymer with, for example, an alkylene oxide or epichlorohydrin may be used. Examples of the catalyst used for anionic polymerization are lithium complexes such as a lithium-naphthalene complex, lithium-anthracene complex and lithium-biphenyl complex, and dialkali metal hydrocarbons such as 1,4-dialkali metal butane, 1,5-dialkali metal pentane, 1,10-dialkali metal decane and 1,4-dialkali metal 1,1,4,4-tetraphenylbutane.

In order to ensure smooth progression of the anionic polymerization a hydrocarbon solvent such as hexane, heptane, benzene, toluene, xylene or cyclohexane is additionally used. When an alkali metal is used as a catalyst, it is preferred to use a Lewis base having a comparatively low polarity such as diethyl ether, dipropyl ether, ethylpropyl ether or ethylbutyl ether together with the above-described solvent.

An epoxy compound is reacted by an ordinary method with the thus-obtained polymer, and the reaction product is treated with a protonic acid such as hydrochloric acid, sulfuric acid or acetic acid to obtain polyhydroxy polybutadiene.

As the epoxy compound, monooxy compounds such as ethylene oxide, propylene oxide, butylene oxide, cyclohexene oxide, styrene oxide or phenylglycidyl ether; polyepoxy compounds such as diglycidyl ether of bisphenol A, vinylcyclohexene diepoxide, butadiene diepoxide, dicyclopentadiene diepoxide, limonene diepoxide or bisepoxide of ethylene glycol; and haloepoxy compounds such as epichlorohydrin, epibromohydrin or methylepichlorohydrin may, for example, be used. Among these, polyepoxy compounds and haloepoxy compounds are preferred.

The monoepoxy compound is preferably used in an equimolar amount to the polymer. More preferably, not less than two mols of epoxy compound are used to one mol of the polymer. It is believed that, the epoxy compound combines with both ends of the polymer in the form of an open ring and the hydrogen atom of the hydroxyl group in the open ring is combined while substituted by an alkali metal.

On the other hand, when using a polyepoxy or haloepoxy compound, the amount of compound used is appropriately selected in accordance with the intended use of the polymer obtained, namely the molecular weight of the polymer and the number of hydroxyl groups. It is ordinarily used in an amount of from 0.5 to 2, preferably from 0.6 to 1.7, moles per mole of the the polymer.

After the epoxy ring has opened, the polymers combine with each other, and a polymer comprising several molecules of the initial polymers combined with each other through an epoxy compound having a hydroxyl group substituted by an alkali metal is obtained. It is also possible to obtain polyhydroxy polybutadiene by reducing a polymer containing oxygen obtained by ozonolysis of a high-molecular weight polybutadiene polymer or by other methods.

Polyhydroxy polybutadienes obtained by various methods as described above have various micro structures, having 1,2 bonds and 1,4 bonds in various ratios. For example, the micro structure of a polyhydroxy polybutadiene produced by radical polymerization is 5 to 30 % of cis-1,4 bonds, 50 to 80% of trans-1,4 bonds, and 15 to 30% of 1,2 bonds. In other words, the polyhydroxy polybutadiene has many 1,4 bonds in the micro structure. By anionic polymerization, it is also possible to obtain a polymer having many 1,4 bonds by appropriately selecting the catalyst and the solvent used. A polyurethane obtained by curing a hydrogenated polyhydroxy polybutadiene having many 1,4 bonds with polyisocyanate has excellent mechanical properties such as tensile strength and elongation like rubber, and the polyurethane generally has better physical properties such as resistance to heat deterioration, oxidation resistance, resistance to ozone, light resistance and weather resistance than a polyurethane obtained from a polyhydroxy polybutadiene having many 1,2 bonds. Therefore, polyhydroxy polybutadienes having more 1,4 bonds than 1,2 bonds, in particular having not less than 50% of 1,4 bonds, more preferably not less than 70% of 1,4 bonds, in the

EP 0 296 888 B1

micro structure, are preferred.

A polyol is obtained by hydrogenating not less than 98% of the double bonds of the main chain and/or of the side chain in the thus-obtained polyhydroxy polybutadiene by a ruthenium catalyst while retaining the hydroxyl groups. The ruthenium catalyst is used in the form of the metal itself, a heterogeneous catalyst carried on a carrier, or a homogeneous catalyst using the metal as a soluble salt.

Examples of the carrier are carbon, alumina, silica alumina, diatomaceous earth, barium carbonate and calcium carbonate. The amount of metal carried on the carrier is ordinarily from 0.01 to 50 wt%, preferably from 0.2 to 15 wt%.

Polyhydroxy butadiene can be reacted with hydrogen as it is, in the presence of ruthenium as a catalyst, but better hydrogenation can be carried out by using a solvent. As the solvent, an aliphatic hydrocarbon, aromatic hydrocarbon, alcohol, ether or a mixture thereof are usable.

The amount of ruthenium catalyst used in the hydrogenation depends on the kind of catalyst and the hydrogenation method. For example, when carrying out suspension polymerization in the presence of a ruthenium catalyst, the amount of ruthenium is from 0.01 to 1.00 wt% based on the polyhydroxy polybutadiene. The reaction temperature is preferably from 20 to 150°C.

A higher reaction temperature is unfavorable in spite of an increase in hydrogenation rate, because the splitting off of hydroxyl groups cannot be disregarded. Hydrogen may be used either in a flow system under normal pressure or under a high pressure. Hydrogenation can be carried out in any reaction form, such as a fixed-bed process and a suspension system.

The double bonds of the main chain and/or the side chain of polyhydroxy polybutadiene are hydrogenated under the above-described conditions. In order to produce polyurethane, it is necessary that the double bonds in the polymer are substantially completely hydrogenated. It is preferred that the polyhydroxy polybutadiene is hydrogenated to such an extent that not less than 98%, preferably not less than 99%, of the double bonds in the polymer before hydrogenation are hydrogenated. It is more preferred that substantially no double bonds remain.

Any polyisocyanate used in urethane industry is usable as the polyisocyanate; tetramethylene diisocyanate, hexamethylene diisocyanate, ethylene diisocyanate, phenylene diisocyanate, tolylene diisocyanate and diphenylmethane diisocyanate are preferred.

The isocyanate is preferably used in an about equimolar amount to the polyol. For polymerization, both a one-shot process and prepolymer molding are usable.

As a reaction accelerator used for the polycondensation, tertiary amines such as triethylamine, triethylene diamine and dimethylaminoethanol, and an organic metal compound such as dibutyl tin dilaurate are preferred.

Another example of a two-pack type polyurethane is a polyurethane obtained by curing a castor oil polyol as the main component under the same conditions as the hydrocarbon polyol.

A part of the hydrogcarbon polyol or the castor oil polyol may be replaced with another polyol such as a polyester polyol or polyether polyol in an amount of from 0 to 49% by weight. If the amount replaced exceeds 49% by weight, there is a danger of impairing the non-hydroscopic property which is feature of the hydrocarbon polyol.

In consideration of workability and safety, it is preferred that the isocyanate is used in the form of a prepolymer by being reacted with a part of the polyol.

It is possible to add various plasticizers, as occasion demands, so that the organic protective layer also serves as an adhesive, while controlling the viscosity of the adhesive before curing and the hardness of the adhesive after curing. The organic protective layer does not peel-off from the disk member even after the disk has been left to stand for a long time at a temperature of 65°C and a relative humidity of 80%, unlike the situation when other adhesives such as epoxy adhesives are used. This is because the adhesive organic protective layer has the advantage in that the adhesion and the elasticity thereof do not deteriorated even if it is left to stand for a long time in the above conditions. In addition, even under the conditions of high temperature and high humidity such as those described above, there is no possibility of the adhesive organic protective layer reacting with a disk substrate member or a recording layer member, thereby deteriorating these members over time.

The thickness of the organic protective layer is generally from 1 to 200 $\mu$m, preferably from 3 to 100 $\mu$m.

The organic protective layer is easy to form by a spin coating method or other ordinary application method.

The organic protective layer has a low moisture permeability rate, and prevents the deterioration of each layer provided on the substrate due to moisture. In addition, since the organic protective layer has good adhesiveness, it can be inserted between two disk members as an adhesive layer to provide a double-

7

sided magnetoopical recording medium.

Some embodiments of a double-sided magnetooptical recording medium are:

(i) A magnetooptical recording medium produced by pasting two disk members, each of which comprises a transparent substrate, a magnetooptical recording layer and a reflective layer, the magnetooptical recording layer being provided between the transparent substrate and the reflective layer, at least one of said members also having an interference layer provided between the transparent substrate and the magnetooptical recording layer, together through an organic protective layer to provide the medium having layers in the order of the transparent substrate, the magnetooptical recording layer, the reflective layer, the organic protective layer, the reflective layer, the magnetooptical recording layer and the transparent substrate, and an interference layer provided between at least one of the transparent substrates and the magnetooptical recording layer.

(ii) A magnetooptical recording medium produced by pasting two disk members, each of which comprises a transparent substrate, an interference layer disposed on the transparent substrate, a magnetooptical recording layer and a reflective layer, and optionally a protective layer composed of a metal oxide or a metal nitride disposed on the reflective layer, the magnetooptical recording layer being provided between the interference layer and the reflective layer, together through an organic protective layer to provide the medium having layers in the order of the transparent substrate, the interference layer, the magnetooptical recording layer, the reflective layer, optionally the protective layer, the organic protective layer, optionally the protective layer, the reflective layer, the magnetooptical recording layer, the interference layer and the transparent substrate.

As described above, a magnetooptical recording media according to the present invention has a high S/N ratio, good recording sensitivity and high corrosion resistance.

The present invention is further explained in the following Examples.

Example 1

A polycarbonate substrate of 130 mm $\phi$ was placed in a sputtering device, which was evacuated to not more than $1.1 \times 10^{-4}$ Pa ($8 \times 10^{-7}$ Torr). By using a mixed gas of Ar and $O_2$, a Ta target was first subjected to reactive sputtering, thereby forming a $Ta_2O_5$ interference layer 80 nm (800 Å) thick. A $Tb_{22}$-$(Fe_{90}Co_{10})_{78}$ recording layer of 30 nm (300 Å) thickness was formed by co-sputtering using a Tb target and an FeCo target in Ar gas. An Al target with Ta chips placed thereon was then sputtered in Ar gas to form a reflective layer of 30 nm (300 Å) thickness. The amount of Ta in the reflective layer was controlled by varying the number of Ta chips.

The recording sensitivity and the carrier level (on the assumption that the carrier level is 0 dB when an Al film is used) of the thus-obtained magnetooptical recording medium were measured by a dynamic characteristic detector equipped with a PIN photodiode differential detector. The recording sensitivity is represented by the recording power (optimum recording power) when the second harmonic distortion is at a minimum.

Recording conditions:
CAV (constant angular velocity): 1800 rpm
Position: 30 mm in radius
On-land recording
Recording frequency: 0.5 MHz
duty: 50%
Reading conditions:
CAV: 1,800 rpm
Reading power: 0.8mW

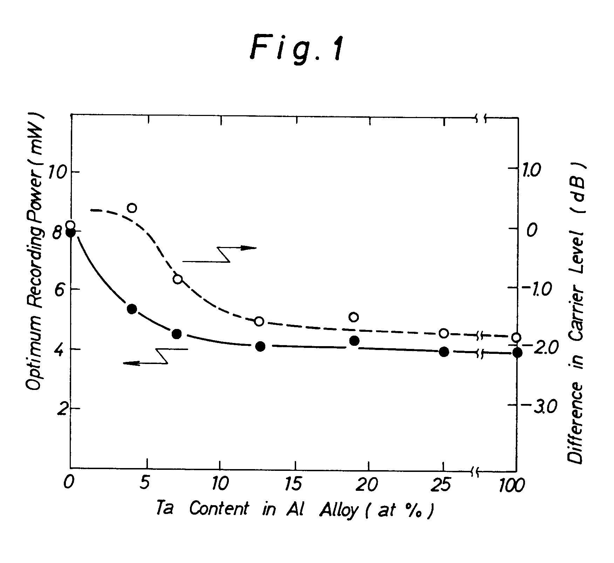

The composition of the reflective layer was analyzed by X-ray fluorometry. The results are shown in Fig. 1. The lower optimum recording power a medium has, the higher its sensitivity, and the higher carrier level a medium has, the higher is the quality of the reproducing signal.

Comparative Examples 1 and 2

A $Ta_2O_5$ interference layer and a TbFeCo recording layer were formed in the same way as in Example 1. A 30 nm (300 Å) thick reflective layer of an Al layer or a Ta layer was formed. The recording sensitivity and the carrier level were measured under the same conditions as in Example 1. The results are shown in Fig. 1. As is clear from Fig. 1, the optimum recording power and the carrier level are reduced with the increase in the Ta content in Al, but when the Ta content is low, it is possible to reduce the optimum recording power to a great extent almost without lowering the carrier level.

Example 2

A polycarbonate substrate was placed in a magnetron sputtering device, which was evacuated to not more than $8 \times 10^{-5}$ Pa. Thereafter, 20 sccm of Ar and 5 sccm of $O_2$ were introduced thereto to adjust the pressure to 0.8 Pa. In this state, a Ta target of 10.2 cm (4 inch) $\phi$ was subjected to DC sputtering at a power of 500 W, and a tantalum oxide interference layer of 80 nm (800 Å) thickness was formed at a rate of 0.4 nm/s (4 Å/s). The complex refractive index (n*) of this layer measured at a wavelength of 633 nm was n* = 2.1 - 0.03i.

After the chamber was evacuated, 30 sccm of Ar gas was introduced so as to adjust the pressure to 0.3 Pa. A Tb target and an $Fe_{90}Co_{10}$ target were simultaneously sputtered to form a $Tb_{23}(Fe_{90}Co_{10})_{77}$ recording layer of 30 nm (300 Å) thickness on the interference layer. Furthermore, an Al target with Ta chips placed thereon was sputtered in Ar gas to form an $Al_{97}Ta_3$ reflective layer of 30 nm (300 Å) thickness on the recording layer.

The initial S/N ratio was 62.5 and the S/N ratio after an acceleration test was 62.3. Almost no cracks were produced. The recording conditions were f = 0.5 MHz, recording = 30 mm, CAV = 1,800 rpm and duty = 50%.

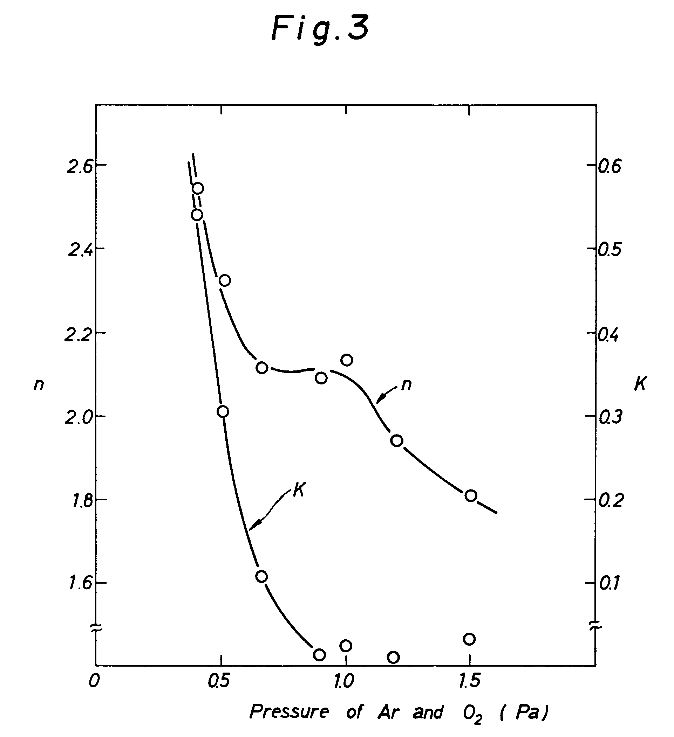

The change in the complex refractive index (n*) of the interference layer in accordance with the pressure at the time of Example 2 is shown in Fig. 3.

Example 3

A polycarbonate substrate of 130 mm $\phi$ was placed in a sputtering device, which was evacuated to not more than $1.1 \times 10^{-4}$ Pa ($8 \times 10^{-7}$ Torr). By using a mixed gas of Ar and $O_2$, a Ta target was first subjected to reactive sputtering, thereby forming a $Ta_2O_5$ interference layer 80 nm (800 Å) thick. A $Tb_{22}$-$(Fe_{90}Co_{10})_{78}$ recording layer of 30 nm (300 Å) thickness was formed by co-sputtering using a Tb target and an FeCo target in Ar gas. An Al target with Ta chips placed thereon was then sputtered in Ar gas to form an $Al_{97}Ta_3$ reflective layer of 30 nm (300 Å) thickness. Furthermore, a tantalum oxide protective layer was formed by sputtering a Ta target in a mixed gas of Ar and $O_2$.

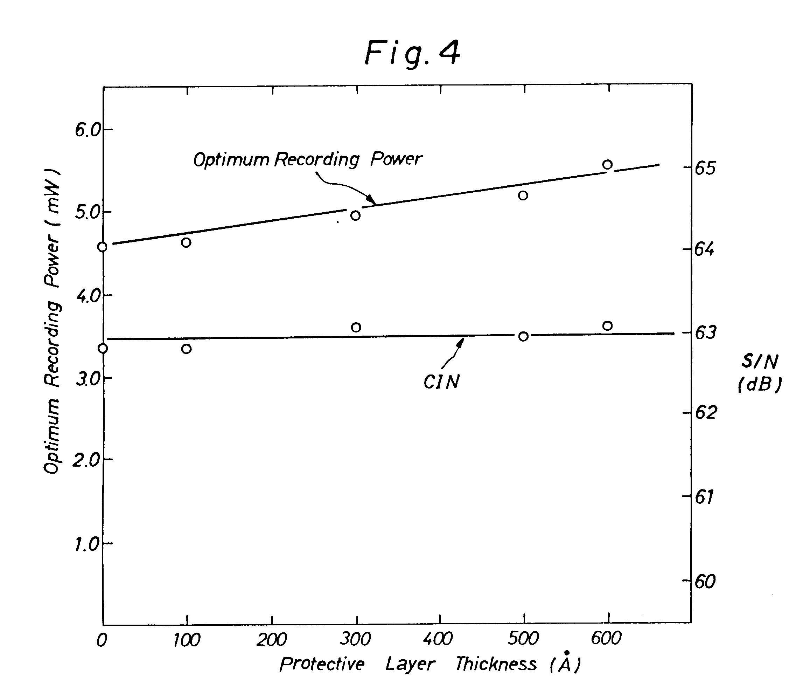

The change in the optimum recording power of the medium caused when the film thickness of the protective layer was varied is shown in Fig. 4.

The recording conditions were f = 0.5 MHz, CAV = 1,800 rpm, duty = 50% and recording = 30 mm.

(The optimum recording power is the recording power when the secondary stress during recording is at a minimum; the smaller the value, the higher the sensitivity.)

When the protective layer was not thicker than 50 nm (500 Å), the deterioration of the sensitivity was at most 10%.

When aluminum oxide was used for the protective layer, substantially the same results were obtained.

Example 4

A magnetooptical recording medium was produced in the same way as in Example 3 except that a protective layer of silicon nitride was formed on the reflective layer by sputtering an Si target in a mixed gas of Ar and $N_2$.

When the protective layer was not more than 50 nm (500 Å) thick, the deterioration of the sensitivity was at most 10%.

When aluminum nitride was used for the protective layer, substantially the same results were obtained.

Example 5

An interference layer, a recording layer, and a reflective layer were sequentially formed on a polycarbonate substrate in the same way as in Example 2, and on the reflective layer, an organic protective layer consisting of a polyurethane was formed as the outermost layer.

The polyurethane was prepared in the following process.

[Preparation of Component A]

Polyether HA(trade name; produced by Mitsubishi Chemical Industries Ltd., polyolefin polyol in which the number-average molecular weight is about 2,000 and the hydroxyl equivalent is 0.907 meq/g): 100 g
Adekaquodol (trade name; produced by Asahi Denka Kabushiki Kaisha, 4-functionality polyol in which the hydroxyl equivalent is 13.7 meq/g): 19.8 g
Paraffinic process oil P-200 (produced by Kyodo Sekiyu Kabushiki Kaisha): 110 g
Tin catalyst UL-22 for producing urethane (produced by MD Kasei Kabushiki Kaisha): 138 mg
These raw materials were uniformly mixed with each other at 50°C to produce Component A. The viscosity thereof was 1.8 Pas (1,800 cPs) at 25°C.

[Preparation of Component B]

Polyether HA: 100 g
Paraffinic process oil P-200: 116 g
These raw materials were uniformly mixed with each other in a separable flask at room temperature. To the mixture, 14.2 g of 2,4-tolylene diisocyanate was added. After reaction at 80°C for 6 hours, Component B was obtained. The viscosity thereof was 3.8 Pas (3,800 cP) at 25°C.
Component A and Component B obtained in this way were mixed in a weight ratio of 1 : 5. After the thus-obtained liquid was defoamed under vacuum, it was applied to the disk.
A pressed sheet was produced from the liquid obtained in the same way. When the physical properties were measured, the 100% tensile stress defined by JIS K6301 was 3 $kgf/cm^2$ and the tensile strength was 7 $kgf/cm^2$. The moisture permeability rate of a 200 $\mu$m-thick film defined by JIS Z0208 was 5 $g/cm^2$ in 24 hours.

Example 6

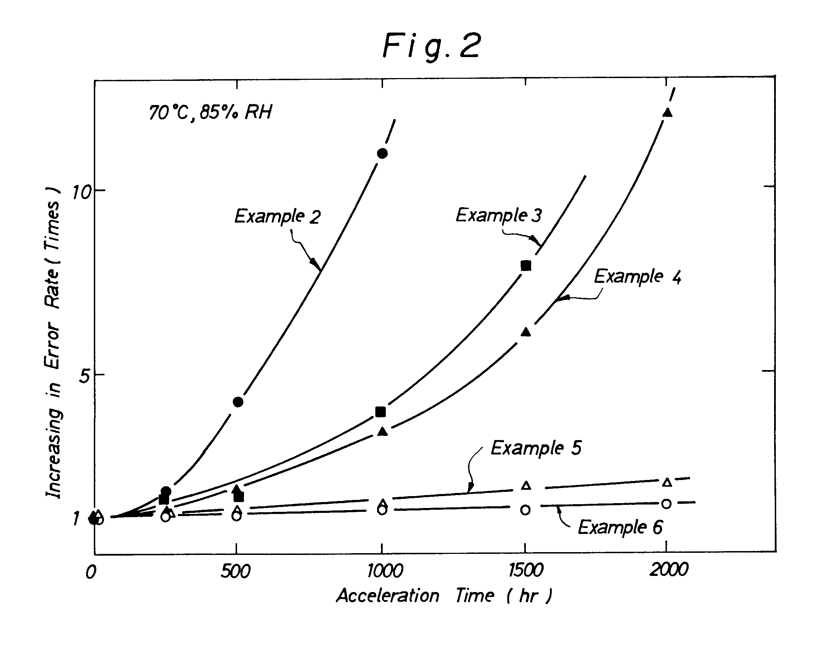

A polycarbonate substrate of 130 mm $\phi$ was placed in a sputtering device, which was evacuated to not more than $1.1 \times 10^{-4}$ Pa ($8 \times 10^{-7}$ Torr). By using a mixed gas of Ar and $O_2$, a Ta target was first subjected to reactive sputtering, thereby forming a $Ta_2O_5$ interference layer 80 nm (800 Å) thick. A $Tb_{22}$-$(Fe_{90}Co_{10})_{78}$ recording layer of 30 nm (300 Å) thickness was formed by co-sputtering using a Tb target and an FeCo target in Ar gas. An Al target with Ta chips placed thereon was then sputtered in Ar gas to form an $Al_{97}Ta_3$ reflective layer of 30 nm (300 Å) thickness. Furthermore, a first protective layer of tantalum oxide of 30 nm (300 Å) thickness was formed by sputtering a Ta target in a mixed gas of Ar and $O_2$. Finally, an organic protective layer of 10 $\mu$m thickness was formed from polyurethane.
Each of the disks obtained in Examples 2 to 6 was subjected to an acceleration test at a temperature of 70°C and a humidity of 85% to measure the increase in the drop-in error rate. The results are shown in Fig. 2.
In the disk of Example 3 which was provided with a tantalum oxide protective layer and the disk of Example 4 which was provided with a silicon nitride protective layer, the increase in the error rate after a 1,000 hours acceleration test was restricted to not more than 5 times. In the disk of Example 5 which was provided with a 10 $\mu$m thick polyurethane resin protective layer, the increase in the error rate after a 2,000 hours acceleration test was restricted to about 2 times. In the disk of Example 6 which was provided with two protective layers of tantalum oxide and a polyurethane resin, the error rate after a 2,000 hours acceleration test was 1.2 times that before the acceleration test.

Comparative Example 3

An interference layer and a recording layer were formed in the same way as in Example 1. Various reflective layers were formed on the recording layer by using a Al layer with various elements other than Ta added thereto to produce disks. The thus-obtained disks together with the disk of Example 1 were subjected to 350 hours acceleration tests at a temperature of 70°C and a relative humidity of 85%. The results are shown in Table 1.
As is clear from Table 1, the reflective film with Ta added thereto had better characteristics than those films with other elements added thereto.

Table 1

| Change of S/N in each reflective layer in acceleration test | |
| --- | --- |
| Reflective layer | $\Delta$ S/N (dB) |
| AlTa | - 0.7 |
| AlTi | - 1.5 |
| AlZr | Not measurable due to corrosion |
| AlPt | Not measurable due to corrosion |
| AlSi | - 1.9 |
| Al | - 1.4 |
| Ta | - 1.8 |

Example 7

A polycarbonate substrate was placed in a magnetron sputtering device, which was evacuated to not more than $5 \times 10^{-5}$ Pa. Thereafter, 30 sccm of Ar and 4 sccm of $N_2$ were introduced thereto to adjust the pressure to 0.5 Pa. In this state, a Ta target of 10.2 cm (4 inch) $\phi$ was subjected to RF sputtering at a power of 500 W, and a silicon nitride interference layer of 75 nm (750 Å) thickness was formed at a rate of 0.15 nm/s (1.5 Å/s). The refractive index of this film was 2.1.

After the chamber was evacuated, 30 sccm of Ar gas was introduced so as to adjust the pressure to 0.3 Pa. A Tb target and an $Fe_{90}Co_{10}$ target were simultaneously sputtered to form a $Tb_{23}(Fe_{90}Co_{10})_{77}$ recording layer of 30 nm (300 Å) thickness on the interference layer. Furthermore, an Al target with Ta chips placed thereon was sputtered in Ar gas to form an $Al_{97}Ta_3$ reflective layer of 30 nm (300 Å) thickness on the recording layer.

When the S/N ratio of the thus-obtained disk was measured at 0.5 MHz, 1800 rpm and recording = 30 mm, the disk showed as good a characteristic as 63 dB.

After the disk was stored for 1 year at normal temperature, no cracks nor deterioration of the S/N ratio were observed.

Example 8

A magnetooptical recording medium was produced in the same way as in Example 2 except that an interference layer of $Si_3N_4$ of 80 nm (800 Å) thickness was formed by sputtering an Si target in a mixed gas of Ar and $N_2$.

When the protective layer was not more than 50 nm (500 Å) thick, the deterioration of the sensitivity was at most 10%.

A 500 hours acceleration test was carried out on this disk at a temperature of 70°C and a relative humidity of 85%. When the drop-in error rates before and after the acceleration test were measured, the increase in the error rate was less than about 2.0 times.

When aluminum oxide was used for the protective layer, substantially the same results were obtained.

Example 9

A magnetooptical recording medium was produced in the same way as in Example 8 except that a protective layer of silicon nitride was formed by sputtering an Si target in a mixed gas of Ar and $N_2$.

When the protective layer was not more than 50 nm (500 Å) thick, the deterioration of the sensitivity was at most 10%.

A 500 hours acceleration test was carried out on this disk at a temperature of 70°C and a relative humidity of 85%. When the drop-in error rates before and after the acceleration test were measured, the increase in the error rate was less than about 2.2 times.

When aluminum nitride was used for the protective layer, substantially the same results were obtained.

Example 10

A polycarbonate substrate of 130 mm $\phi$ was charged in a sputtering device, which was evacuated to not more than 1.1 x $10^{-3}$ Pas (8 x $10^{-6}$ Torr). Thereafter, 20 sccm of Ar and 5 sccm of $O_2$ were introduced thereto to adjust the pressure to 0.8 Pa. In this state, a Ta target of 10.2 cm (4 inch) $\phi$ was subjected to DC sputtering at a power of 500 W, and a tantalum oxide interference layer of 80 nm (800 Å) thickness was formed at a rate of 0.4 nm/s (4 Å/s). The complex refractive index (n*) of this layer measured at a wavelength of 633 nm was n* = 2.1 - 0.03i.

After the chamber was evacuated, 30 sccm of Ar gas was introduced so as to adjust the pressure to 0.3 Pa. A Tb target and an $Fe_{90}Co_{10}$ target were simultaneously sputtered to form a $Tb_{22}(Fe_{90}Co_{10})_{78}$ recording layer of 30 nm (300 Å) thickness on the interference layer. Furthermore, an Al target with Ta chips placed thereon was sputtered in Ar gas to form an $Al_{97}Ta_3$ reflective layer of 30 nm (300 Å) thickness on the recording layer. 30 sccm of Ar and 4 sccm of $N_2$ were introduced to adjust the pressure to 0.5 Pa. In this state, an Si target of 10.2 cm (4 inch) $\phi$ was subjected to reactive sputtering at a power of 500 W to form a silicon nitride protective layer of 30 nm (300 Å) thickness having a refractive index of 2.1 at a rate of 0.15 nm/4 s (1.5 Å/4 s). Two such magnetooptical recording media were pasted to each other with the protective layers facing each other by using the polyurethane obtained in Example 5 as an adhesive. The thickness of the polyurethane adhesive layer (organic protective layer) was 10 $\mu$m.

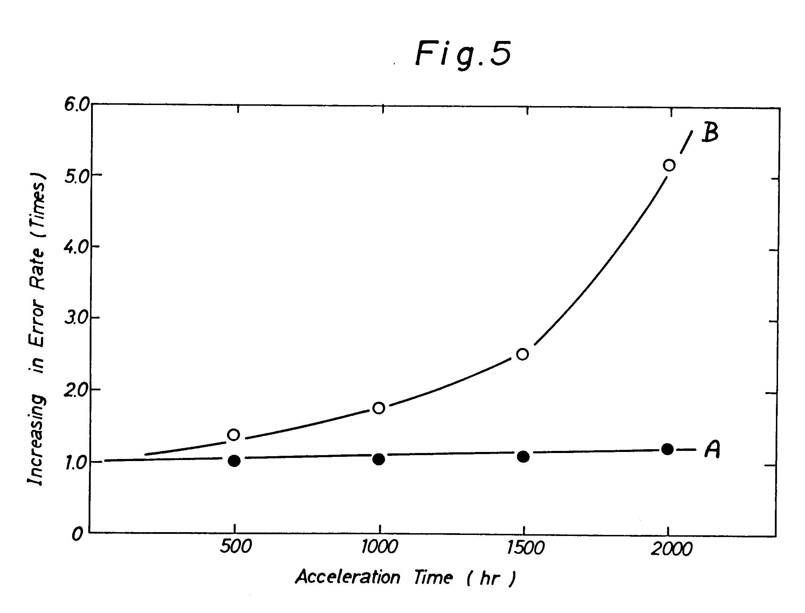

The disk thus obtained was subjected to a 2,000 hours acceleration test at a temperature of 70°C and a relative humidity of 85% and the increase in the error rate over time was observed. The increase in error rate after 2,000 hours was restricted to 1.3 times. The result is shown in Fig. 5.

Comparative Example 4

A disk having a substrate, an interference layer, a recording layer and a reflective layer having the same structures as those Example 10 was made. Two such disks were pasted to each other with an acrylate adhesive. This adhesive had a moisture permeability rate of 15 g/m$^2$ in 24 hours but as to the 100% tensile stress, the adhesive was not elongated to 100%. In other words, the adhesive was hard. The disk thus obtained was subjected to a 2,000 hours acceleration test at a temperature of 70°C and a relative humidity of 85% and the increase in the error rate over time was observed. The error rate after 2,000 hours was increased to 5.2 times and production of cracks was observed. The result is shown in Fig. 5.

Example 11

Two magnetooptical recording media composed of a polycarbonate substrate, an interference layer, a recording layer and a reflective layer and produced in the same way as in Example 6 were pasted to each other with the reflective layers facing each other by using the polyurethane obtained in Example 5 as an adhesive. The thickness of the polyurethane adhesive layer (organic protective layer) was 50 $\mu$m.

The disk thus obtained was subjected to a 2,000 hours acceleration test at a temperature of 70°C and a relative humidity of 85% and the increase in the error rate over time was observed. The increase in error rate after 2,000 hours was restricted to 1.2 times.

Example 12

A polycarbonate substrate of 130 mm $\phi$ was charged in a sputtering device, which was evacuated to not more than 1.1 x $10^{-4}$ Pa (8 x $10^{-7}$ Torr). Thereafter, 30 sccm of Ar and 4 sccm of $N_2$ were introduced thereto to adjust the pressure to 0.5 Pa. In this state, a Ta target of 10.2 cm (4 inch) $\phi$ was subjected to RF sputtering at a power of 500 W, and a silicon nitride ($SiN_4$) interference layer of 75 nm (750 Å) thickness was formed at a rate of 0.15 nm/s (1.5 Å/s). The complex refractive index (n*) of this layer measured at a wavelength of 633 nm was n* = 2.1 - 0.03i.

After the chamber was evacuated, 30 sccm of Ar gas was introduced so as to adjust the pressure to 0.3 Pa. A Tb target and an $Fe_{90}Co_{10}$ target were simultaneously sputtered to form a $Tb_{22}(Fe_{90}Co_{10})_{78}$ recording layer of 30 nm (300 Å) thickness on the interference layer. Furthermore, an Al target with Ta chips placed thereon was sputtered in Ar gas to form an $Al_{97}Ta_3$ reflective layer of 30 nm (300 Å) thickness on the recording layer. 20 sccm of Ar and 5 sccm of $O_2$ were introduced to adjust the pressure to 0.8 Pa. In this state, a Ta target of 10.2 cm (4 inch) $\phi$ was subjected to DC at a power of 500 W to form a tantalum oxide protective layer of 80 nm (800 Å) thickness at a rate of 0.4 nm/4s (4 Å/4 s). Two such magnetooptical recording media were pasted to each other with the protective layers facing each other by using the polyurethane obtained in Example 5 as an adhesive. The thickness of the polyurethane adhesive layer (organic protective layer) was 10 $\mu$m.

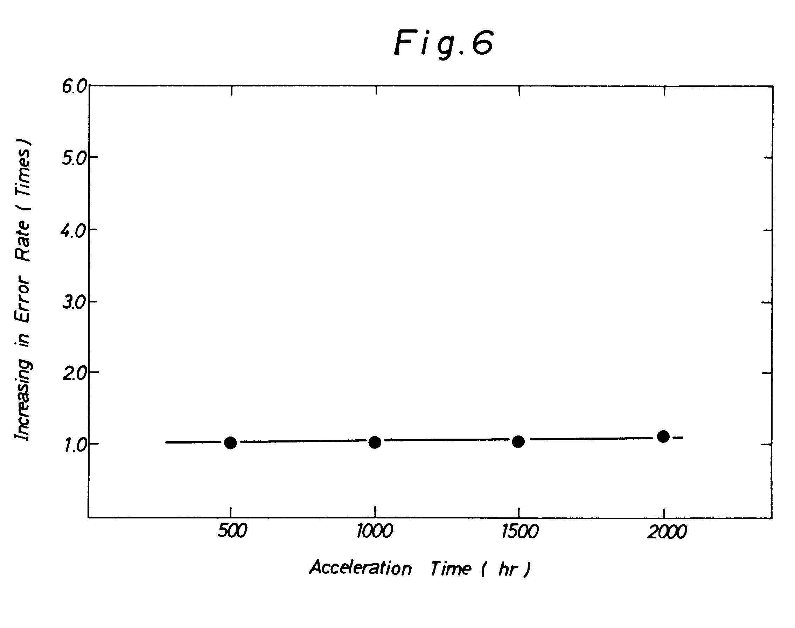

The disk thus obtained was subjected to a 2,000 hours acceleration test at a temperature of 70°C and a relative humidity of 85% and the increase in the error rate over time was observed. The increase in error rate after 2,000 hours was restricted to 1.2 times. The result is shown in Fig. 6.

Example 13

A $Tb_{22}(Fe_{90}Co_{10})_{78}$ recording layer of 30 nm (300 Å) thickness was formed on the interference layer provided on a polycarbonate substrate in the same way as in Example 12 by binary sputtering using a Tb target and an FeCo target in Ar gas. An Al target with Ta chips placed thereon was then sputtered in Ar gas to form an $Al_{97}Ta_3$ reflective layer of 30 nm (300 Å) thickness. Two such magnetooptical recording media were pasted to each other with the reflective layers facing each other by using the polyurethane obtained in Example 5 as an adhesive. The thickness of the polyurethane adhesive layer (organic protective layer) was 10 $\mu$m.

The disk thus obtained was subjected to a 2,000 hours acceleration test at a temperature of 70°C and a relative humidity of 85% and the increase in the error rate over time was observed. The increase in error rate after 2,000 hours was restricted to 1.5 times.

Example 14

An interference layer, a recording layer, a reflective layer and a silicon nitride protective layer were sequentially formed on a polycarbonate substrate in the same way as in Example 10, and on the protective layer, an organic protective layer composed of the polyurethane obtained in Example 5 was formed as the outermost layer.

The thus-obtained disk was subjected to a 1,500 hours acceleration test at a temperature of 70°C and a relative humidity of 85% and the increase in the drop-in error rate with time was observed. The increase in error rate after 1,500 hours was restricted to 1 times.

**Claims**

1. A magnetooptical recording medium comprising a transparent substrate, an interference layer, a magnetooptical recording layer and a reflective layer, the magnetooptical recording layer being provided between the interference layer and the reflective layer, characterized in that the reflective layer is composed of an Al alloy containing 0.1 to 15 at% Ta.

2. A magnetooptical recording medium according to claim 1, wherein a protective layer composed of a metal or metalloid oxide or a metal or metalloid nitride is provided on said reflective layer.

3. A magnetooptical recording medium according to claim 2, wherein said metal or metalloid oxide or metal or metalloid nitride of said protective layer is tantalum oxide or silicon nitride.

4. A magnetooptical recording medium according to claim 1, wherein an organic protective layer is provided such that the reflective layer is between the magnetooptical recording layer and the organic protective layer.

5. A magnetooptical recording medium according to claim 4, wherein two members, each in the form of a disk and comprising a transparent substrate, a magnetooptical recording layer and a reflective layer, in which the magnetooptical recording layer is provided between the transparent substrate and the reflective layer, at least one of said members also having an interference layer provided between the transparent substrate and the magnetooptical recording layer, are joined to each other through an organic protective layer to provide a medium having layers in the order of the transparent substrate, the magnetooptical recording layer, the reflective layer, the organic protective layer, the reflective layer, the magnetooptical recording layer and the transparent substrate, and an interference layer provided between at least one of the transparent substrates and the magnetooptical recording layer.

6. A magnetooptical recording medium according to claim 4 or 5, wherein said organic protective layer has a 100% tensile stress as defined in JIS (Japanese Industrial Standard) K6301 of not more than 4.9

13

EP 0 296 888 B1

MPa (50 kgf/cm$^2$) and a moisture permeability rate of not more than 20 g/m$^2$ in 24 hours as defined in JIS Z0208.

7.  A magnetooptical recording medium according to claim 6, wherein said 100% tensile stress is not more than 2.9 MPa (30 kgf/cm$^2$) and said moisture permeability rate is not more than 10 g/m$^2$ in 24 hours.

8.  A magnetooptical recording medium according to any one of claims 4 to 7, wherein said organic protective layer is composed of a polyurethane obtainable from a hydrocarbon polyol.

9.  A magnetooptical recording medium according to claim 8, wherein said polyurethane is obtainable from a hydrocarbon polyol and an isocyanate compound, said polyol and isocyanate compound being in relative proportions such as to provide a NCO:OH ratio of from 0.8:1 to 1.3:1.

10. A magnetooptical recording medium according to claim 8 or 9, wherein said polyol is a polyhydroxy polybutadiene having, on average, not less than 1 hydroxyl group per molecule and an average molecular weight of 500 to 50,000.

11. A magnetooptical recording medium according to any one of claims 4 to 10, wherein a protective layer composed of a metal or metalloid oxide or a metal or metalloid nitride is provided between the or at least one of the said reflective layers and said organic protective layer.

12. A magnetooptical recording medium according to claim 11, wherein said metal or metalloid oxide or metal or metalloid nitride of said protective layer is tantalum oxide or silicon nitride.

13. A magnetooptical recording medium according to any one of claims 1 to 12, wherein said interference layer is composed of a metal or metalloid oxide or a metal or metalloid nitride.

14. A magnetooptical recording medium according to claim 13, wherein said metal or metalloid oxide or metal or metalloid nitride in the interference layer is tantalum oxide or silicon nitride.

15. A magnetooptical recording medium according to any one of claims 1 to 14, wherein said magnetooptical recording layer is composed of an alloy of a rare earth metal and a transition metal.

16. A magnetooptical recording medium according to claim 15, wherein said alloy of a rare earth metal and a transition metal contains at least one of Tb, Fe and Co.

17. A magnetooptical recording medium according to any one of claims 1 to 16, wherein the reflective layer is composed of an Al alloy containing 0.5 to 10 at% Ta.

18. A magnetooptical recording medium according to claim 17, wherein the reflective layer is composed of an Al alloy containing 1 to 8 at% Ta.

**Patentansprüche**

1.  Magnetooptisches Aufzeichnungsmedium umfassend ein transparentes Substrat, eine Interferenzschicht, eine magnetooptische Aufzeichnungsschicht und eine reflektierende Schicht, wobei die magnetooptische Aufzeichnungsschicht zwischen der Interferenzschicht und der reflektierenden Schicht liegt, dadurch gekennzeichnet, daß die reflektierende Schicht aus einer Al-Legierung besteht, die 0,1 bis 15 Atom-% Ta enthält.

2.  Magnetooptisches Aufzeichnungsmedium nach Anspruch 1, wobei eine Schutzschicht, die aus einem Metall- oder Halbmetalloxid oder einem Metall- oder Halbmetallnitrid besteht, auf der reflektierenden Schicht aufgebracht ist.

3.  Magnetooptisches Aufzeichnungsmedium nach Anspruch 2, wobei das Metall- oder Halbmetalloxid oder Metall- oder Halbmetallnitrid der Schutzschicht Tantaloxid oder Siliciumnitrid ist.

14

**4.** Magnetooptisches Aufzeichnungsmedium nach Anspruch 1, wobei eine organische Schutzschicht so angebracht ist, daß die reflektierende Schicht zwischen der magnetooptischen Aufzeichnungsschicht und der organischen Schutzschicht liegt.

**5.** Magnetooptisches Aufzeichnungsmedium nach Anspruch 4, worin zwei Elemente, jedes in Form einer Platte und ein transparentes Substrat eine magnetooptische Aufzeichnungsschicht und eine reflektierende Schicht enthaltend, wobei mindestens eines der Elemente auch mit einer Interferenzschicht zwischen dem transparenten Substrat und der magnetooptischen Aufzeichnungsschicht ausgestattet ist, miteinander durch eine organische Schutzschicht verbunden sind, um ein Medium bereitzustellen, das Schichten in der Reihenfolge das transparente Substrat, die magnetooptische Aufzeichnungsschicht, die reflektierende Schicht, die organische Schutzschicht, die reflektierende Schicht, die magnetooptische Aufzeichnungsschicht und das transparente Substrat sowie eine Interferenzschicht, die zwischen mindestens einem der transparenten Substrate und der magnetooptischen Aufzeichnungsschicht bereitgestellt ist, aufweist.

**6.** Magnetooptisches Aufzeichnungsmedium nach Anspruch 4 oder 5, wobei die organische Schutzschicht eine 100%-Dehnspannung, wie sie in JIS (Japanischer Industrie-Standard) K 6301 definiert ist, von nicht mehr als 4,9 MPa (50 kgf/cm$^2$) und eine Durchlässigkeitsrate für Feuchtigkeit nach Definition in JIS Z 0208 von nicht mehr als 20 g/m$^2$ in 24 Stunden aufweist.

**7.** Magnetooptisches Aufzeichnungsmedium nach Anspruch 6, wobei die 100%-Dehnspannung nicht mehr als 2,9 MPa (30 kgf/cm$^2$) und die Durchlässigkeitsrate für Feuchtigkeit nicht mehr als 10 g/m$^2$ in 24 Stunden ist.

**8.** Magnetooptisches Aufzeichnungsmedium nach einem der Ansprüche 4 bis 7, wobei die organische Schutzschicht aus einem Polyurethan, das aus einem Kohlenwasserstoffpolyol erhältlich ist, besteht.

**9.** Magnetooptisches Aufzeichnungsmedium nach Anspruch 8, wobei das Polyurethan aus einem Kohlenwasserstoffpolyol und einer Isocyanatverbindung erhältlich ist, das Polyol und die Isocyanatverbindung in derartigen wechselseitigen Anteilen vorliegen, daß ein NCO:OH-Verhältnis von 0,8:1 bis 1,3:1 erreicht wird.

**10.** Magnetooptisches Aufzeichnungsmedium nach Anspruch 8 oder 9, wobei das Polyol ein Polyhydroxy-Polybutadien ist, das im Mittel nicht weniger als 1 Hydroxylgruppe pro Molekül aufweist und ein Durchschnittsmolekulargewicht zwischen 500 und 50 000 hat.

**11.** Magnetooptisches Aufzeichnungsmedium nach einem der Ansprüche 4 bis 10, wobei eine Schutzschicht, die aus einem Metall- oder Halbmetalloxid oder einem Metall- oder Halbmetallnitrid besteht, zwischen der oder mindestens einer der reflektierenden Schicht(en) und der organischen Schutzschicht vorhanden ist.

**12.** Magnetooptisches Aufzeichnungsmedium nach Anspruch 11, wobei das Metall- oder Halbmetalloxid oder Metall- oder Halbmetallnitrid der Schutzschicht Tantaloxid oder Siliciumnitrid ist.

**13.** Magnetooptisches Aufzeichnungsmedium nach einem der Ansprüche 1 bis 12, wobei die Interferenzschicht aus einem Metall- oder Halbmetalloxid oder einem Metall- oder Halbmetallnitrid besteht.

**14.** Magnetooptisches Aufzeichnungsmedium nach Anspruch 13, wobei das Metall- oder Halbmetalloxid oder Metall- oder Halbmetallnitrid in der Interferenzschicht Tantaloxid oder Siliciumnitrid ist.

**15.** Magnetooptisches Aufzeichnungsmedium nach einem der Ansprüche 1 bis 14, wobei die magnetooptische Aufzeichnungsschicht aus einer Legierung eines Seltenerdmetalls und eines Übergangsmetalls besteht.

**16.** Magnetooptisches Aufzeichnungsmedium nach Anspruch 15, wobei die Legierung eines Seltenerdmetalls und eines Übergangsmetalls mindestens eines der Elemente Tb, Fe und Co enthält.

**17.** Magnetooptisches Aufzeichnungsmedium nach einem der Ansprüche 1 bis 16, wobei die reflektierende Schicht aus einer Al-Legierung besteht, die zwischen 0,5 und 10 Atom-% Ta enthält.

**18.** Magnetooptisches Aufzeichnungsmedium nach Anspruch 17, wobei die reflektierende Schicht aus einer Al-Legierung besteht, die zwischen 1 und 8 Atom-% Ta enthält.

**Revendications**

**1.** Support d'enregistrement magnéto-optique comprenant un substrat transparent, une couche d'interférence, une couche d'enregistrement magnéto-optique et une couche réfléchissante, la couche d'enregistrement magnéto-optique étant prévue entre la couche d'interférence et la couche réfléchissante, caractérisé en ce que la couche réfléchissante est formée d'un alliage d'Al contenant 0,1 à 15 % d'atomes de Ta.

**2.** Support d'enregistrement magnéto-optique selon la revendication 1, dans lequel une couche protectrice constituée d'un oxyde d'un métal ou d'un métalloïde ou d'un nitrure d'un métal ou d'un métalloïde est prévue sur ladite couche réfléchissante.

**3.** Support d'enregistrement magnéto-optique selon la revendication 2, dans lequel ledit oxyde d'un métal ou d'un métalloïde ou ledit nitrure d'un métal ou d'un métalloïde de ladite couche protectrice est de l'oxyde de tantale ou du nitrure de silicium.

**4.** Support d'enregistrement magnéto-optique selon la revendication 1, dans lequel une couche protectrice organique est prévue de telle sorte que la couche réfléchissante est située entre la couche d'enregistrement magnéto-optique et la couche protectrice organique.

**5.** Support d'enregistrement magnéto-optique selon la revendication 4, dans lequel deux éléments, chacun sous la forme d'un disque et comprenant un substrat transparent, une couche d'enregistrement magnéto-optique et une couche réfléchissante, parmi lesquelles la couche d'enregistrement magnéto-optique est disposée entre le substrat transparent et la couche réfléchissante, et au moins l'un desdits éléments possédant également une couche d'interférence disposée entre le substrat transparent et la couche d'enregistrement magnéto-optique, sont réunis entre eux par l'intermédiaire d'une couche organique protectrice de manière à former un milieu comprenant des couches disposées dans l'ordre : substrat transparent, couche d'enregistrement magnéto-optique, couche réfléchissante, couche organique protectrice, couche réfléchissante, couche d'enregistrement magnéto-optique et substrat transparent, et une couche d'interférence disposée entre au moins l'un des substrats transparents et la couche d'enregistrement magnéto-optique.

**6.** Support d'enregistrement magnéto-optique selon la revendication 4 ou 5, dans lequel ladite couche organique protectrice possède une résistance à la traction à 100 % définie dans JIS (Japanese Industrial Standard) K6301 non supérieure à 4,9 MPa (50 kgf/cm$^2$), et un taux de perméabilité à l'humidité non supérieur à 20 g/m$^2$ en 24 heures, tel que défini dans JIS Z0208.

**7.** Support d'enregistrement magnéto-optique selon la revendication 6, dans lequel ladite résistance à la traction à 100 % n'est pas supérieure à 2,9 MPa (30 kgf/cm$^2$) et ledit taux de perméabilité à l'humidité n'est pas supérieur à 10 g/m$^2$ en 24 heures.

**8.** Support d'enregistrement magnéto-optique selon l'une quelconque des revendications 4 à 7, dans lequel ladite couche organique protectrice est constituée par du polyuréthane pouvant être obtenu à partir d'un polyol hydrocarburé.

**9.** Support d'enregistrement magnéto-optique selon la revendication 8, dans lequel ledit polyuréthane peut être obtenu à partir d'un polyol hydrocarburé et d'un composé isocyanate, ledit polyol et ledit composé isocyanate étant présents dans des proportions relatives de manière à fournir un rapport NCO:OH compris entre 0,8:1 et 1,3:1.

**10.** Support d'enregistrement magnéto-optique selon la revendication 8 ou 9, dans lequel ledit polyol est un polyhydroxypolybutadiène possédant en moyenne pas moins de 1 groupe hydroxyle par molécule et

EP 0 296 888 B1

un poids moléculaire moyen compris entre 500 et 50 000.

11. Support d'enregistrement magnéto-optique selon l'une quelconque des revendications 4 à 10, dans lequel une couche protectrice constituée d'un oxyde d'un métal ou d'un métalloïde ou d'un nitrure d'un métal ou d'un métalloïde est prévue entre la couche réfléchissante ou au moins l'une desdites couches réfléchissantes et ladite couche protectrice organique.

12. Support d'enregistrement magnéto-optique selon la revendication 11, dans lequel ledit oxyde d'un métal ou d'un métalloïde ou ledit nitrure d'un métal ou d'un métalloïde de ladite couche protectrice est de l'oxyde de tantale ou du nitrure de silicium.

13. Support d'enregistrement magnéto-optique selon l'une quelconque des revendications 1 à 12, dans lequel ladite couche d'interférence est constituée par un oxyde d'un métal ou d'un métalloïde ou un nitrure d'un métal ou d'un métalloïde.

14. Support d'enregistrement magnéto-optique selon la revendication 13, dans lequel ledit oxyde d'un métal ou d'un métalloïde ou ledit nitrure d'un métal ou d'un métalloïde dans la couche d'interférence est l'oxyde de tantale ou le nitrure de silicium.

15. Support d'enregistrement magnéto-optique selon l'une quelconque des revendications 1 à 14, dans lequel ladite couche d'enregistrement magnéto-optique est constituée par un alliage d'un métal des terres rares et d'un métal de transition.

16. Support d'enregistrement magnéto-optique selon la revendication 15, dans lequel ledit alliage d'un métal des terres rares et d'un métal de transition contient au moins l'un de Tb, Fe et Co.

17. Support d'enregistrement magnéto-optique selon l'une quelconque des revendications 1 à 16, dans lequel la couche réfléchissante est constituée d'un alliage d'Al contenant 0,5 à 10 % d'atomes de Ta.

18. Support d'enregistrement magnéto-optique selon la revendication 17, dans lequel la couche réfléchissante est constituée d'un alliage d'Al contenant 1 à 8 % d'atomes de Ta.

17

# Fig. 1

Fig.2

# Fig.3

Fig. 4

Optimum Recording Power

C/N

S/N (dB)

65

64

63

62

61

60

0  100  200  300  400  500  600

Protective Layer Thickness (Å)

Optimum Recording Power (mW)

6.0
5.0
4.0
3.0
2.0
1.0

21

# Fig. 5

# Fig.6

EP 0 296 888 B1